# EUROPEAN PATENT SPECIFICATION

(11) **EP 2 109 713 B1**
(45) Date of publication and mention of the grant of the patent: **24.07.2013**
(21) Application number: 08700911.4
(22) Date of filing: 29.01.2008
(51) Int. Cl.: F03D 1/06, F03D 3/06

(54) **WIND TURBINE BLADE**
WINDTURBINENSCHAUFEL
AUBE D'ÉOLIENNE

(30) Priority: 29.01.2007 DK 200700134
(43) Date of publication of application: 21.10.2009
(73) Proprietor: Bladena ApS, 4100 Ringsted (DK)
(72) Inventor: JENSEN, Find, Mølholt, DK-4130 Viby Sjaelland (DK)
(74) Representative: Guardian IP Consulting I/S
(86) International application number: PCT/DK2008/000040
(87) International publication number: WO 2008/092451

(56) References cited:
- EP-A- 0 061 567
- EP-A- 1 754 589
- EP-A- 1 785 621
- EP-A- 1 878 915
- EP-A- 1 880 833
- WO-A-00/14405
- WO-A-01/46582
- US-A- 5 375 324

## Description

The present invention rotates to a blade for a wind turbine, particularly to a blade that may be produced by an advanced manufacturing process for producing a blade with high quality structural components. Particularly, the structural components, which are preferably manufactured from fibre reinforced plastic material, will have a high level of stretched fibres as well as a far better controlled resin distribution and content and also a low void content.

A wind turbine blade, as for example disclosed in EP-A-0 061 567, normally consists of an aerodynamic shell and an internal girder such as a beam or a spar. Often two girders are used, and along with the shell the girders can be said to form a box profile. The top and bottom of the box profile are often referred to as the caps. Some types of blades are designed with a spar in the form of a box profile which is manufactured separately and bonded in between prefabricated surface shells.

The caps are the main load bearing elements in the blade as they under normal circumstances are designed to carry the bending moment generated by the flapwise load.

Therefore there is a massive material concentration in the caps making them rather thick and heavy. In an attempt of reducing the weight of the caps, the substitution of glass fibres in the caps with carbon fibres has until now been quite difficult because carbon fibres must be used with much more care in a production process to obtain the full potential of this material in terms of load carrying effect. Due to the fact that very large moulds are needed for the shells and girders of known wind turbine blades, both the handling of the material and methods of curing has not been adequate for the use of carbon fibres, resulting in inferior quality laminates with unwanted crimped fibres and too high void and resin contents.

During normal operation, a wind turbine blade is primarily loaded at an angle to the flapwise directions by aerodynamic and inertia forces.

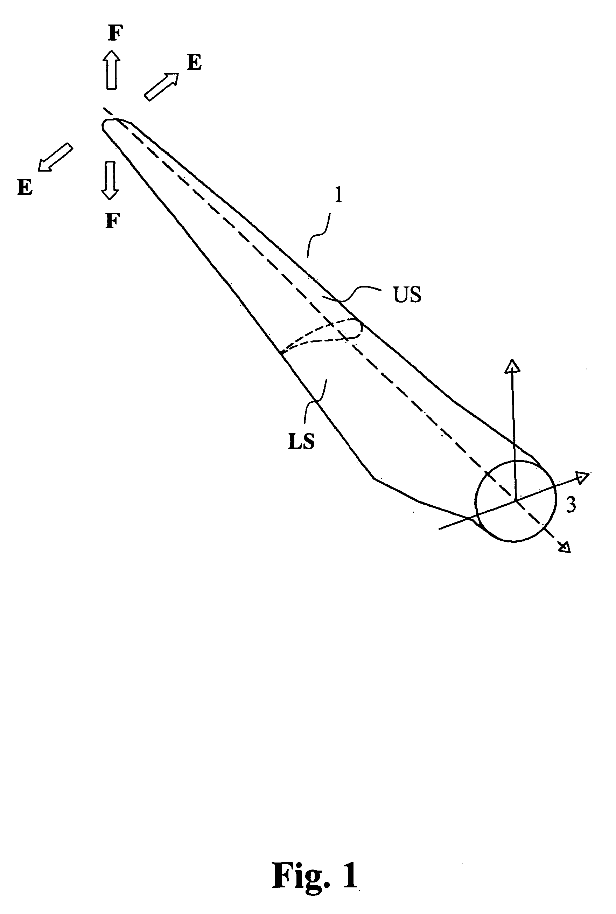

This load is typically resolved into its components in the flapwise and edgewise directions. By flapwise direction is meant a direction substantially perpendicular to a transverse axis through a cross-sectional cut of the blade. Alternatively, the flapwise direction may be construed as the direction (or the opposite/reverse direction) in which the aerodynamic lift acts on the profile. The flapwise and edgewise directions are illustrated by way of example as indicated by arrows F and E in Fig. 1.

The flapwise load bending the blade from the Pressure side of the blade to the Suction side, see Fig. 1 - the upper side US will be the suction side of the blade and the lower side LS will be the pressure side, when the blade is in normal operation, is the most severe load. This load case is referred to as the PTS load. The flapwise load in the opposite direction, from the Suction side of the blade To the Pressure side - STP load, is typically approximately 30 % less than the PTS load. In the PTS load case the cap on the upper side, see ref. US in Fig. 1, of the profile is in compression.

Fibre reinforced plastic used in wind turbine blades are layered materials and are more susceptive to compression forces than isotropic materials. This is because the fibres as a single fibre or a small bundle can buckle inside the laminate. This phenomenon is referred to as micro buckling and when the fibre or the bundle has buckled its load bearing capability is much smaller. Other fibres in the laminate have to carry the load, but if the laminate is further stressed, these fibres can also succumb to the micro buckling, and a global failure of the laminate can be the result. Carbon fibre reinforced plastic (CFRP) is very prone to this type of defects, if the manufacture of the laminate has not been carried out according to high manufacturing standards. Several attempts to produce a blade with carbon fibres in the load bearing parts have resulted in failure of the blade, because it was not possible to achieve the quality of the laminate necessary for the use of carbon fibres.

Furthermore, the cap in the upper part of the blade has only a very small transverse curvature, i.e. a very large radius of curvature which makes it particularly exposed deflections, also denoted buckling. The use of carbon fibres and high quality laminates facilitates a thinner cap, but this makes the cap more sensitive to buckling caused by compression forces.

The cap in the lower part of the blade, c.f. ref. LS in Fig. 1, is loaded in tension in the PTS load case, and fibre reinforced plastics can easily cope with this type of load.

In the STP load case, the cap in the lower part of the blade is subjected to compression forces, however this load is typically smaller compared to the load in the upper cap and further the lower cap has a much smaller radius of curvature which, as mentioned, increases the resistance to buckling failures.

For the manufacture of the laminates of wind turbine blades different methods are known in the industry. An older method comprises a wet lay up technique, where fabrics of fibreglass were laid into a mould and wetted manually with resin, and then built layer by layer. More recent methods which are now mainly used within the industry comprise manufacturing using a prepreg material or a resin infusion process.

Prepreg material is fabrics of fibres, mainly fibreglass or carbon fibres, that are wetted and consolidated with high viscosity resin. Such a material is more difficult to handle and position because it is stiff and heavy, however it is advantageous in that the resin is distributed optimally and the resin content can be thoroughly controlled which facilitates manufacturing of laminates with lower weight.

The resin infusion process involves the build-up of the layers of fabric on top of each other and then covering the layers of fabric with a thin plastic sheet material. Then resin is delivered through inlets in the mould and/or in the plastic sheet and drawn into the layers of fabric by vacuum and thereby wetting the fibres. This is an economically attractable way of producing laminates, but the method has the drawbacks that the resin content may vary unsatisfactory throughout the part and further the void content is higher in comparison to laminates made of prepregs.

As the individual fibre mats or prepregs are typically quite large and heavy, they are difficult to place accurately in a mould and it is further difficult to obtain the desired level of stretched fibres in the laminate. The most advanced method of placing fibre mats or prepregs utilize a machine that place pre-cut fibre mats or prepregs from a roll into the mould which very often requires assistance from manual labour. Although such machines may improve the quality of the laminate, neither the prepreg method nor the resin infusion process provides an optimal laminate.

The evacuation of trapped air and the consolidation of the laminates are known to be improved if an autoclave is used subsequent to either of the described processes, but it is not economically feasible to construct autoclaves that are able to house the often very large moulds that are necessary in the wind turbine industry.

In a presently available and commonly used technique for the manufacture of wind turbine blades, the assembly between the shell parts and the one or more internal girders is as follows: the lower shell part is prepared for the bonding phase when it sits in the mould curing. Adhesive is applied on the inner surface of the lower shell part beneath the intended position(s) of the girder(s) and afterwards the girder(s) is/are placed on the adhesive. The girder(s) is/are now bonded to the lower shell. For the next step, adhesive is applied on the bonding flanges on top of the girders and in the trailing and leading edge sections of the lower shell part. The upper shell part is then placed on top of both the girder(s) and the lower shell part and kept in that position until the adhesive has cured. With this process it is often difficult to achieve a correct alignment of the leading edge of the lower and upper shell parts. If a correct alignment is not achieved the resulting aerodynamic shape of the blade is compromised and consequently a less stable blade with a lower operating power output is produced.

Presently, there is a need for a wind turbine blade that overcomes the disadvantages of the currently available techniques as described and may be manufactured with a significantly better quality than achieved in previously provided blades.

It is therefore an object of the present invention to provide a wind turbine blade with increased strength, yet still with a reduced weight in comparison to currently available blades and at a lower manufacturing cost.

It is also an object of the present invention to provide a wind turbine blade which facilitates the use of advanced fibre materials such as carbon fibres.

It is another object of the present invention to provide a wind turbine blade of better quality due to more homogenous material distribution and thus with an improved reliability of the blade profile.

It is another object of the present invention to provide a wind turbine blade with a leading edge without deviation from the optimal shape.

It is yet another object of the present invention to provide a wind turbine blade with increased aerodynamic performance and thereby a higher power output.

It is another object of the present invention to provide alternatives to the prior art.

In particular, it may be seen as an object of the present invention to provide a wind turbine blade that solves the above mentioned problems of the prior art by providing a blade made from combinations of novel and inventive components e.g. such as described by way of the examples in the following disclosure.

According to the present invention, the above-mentioned and other objects are fulfilled by a wind turbine blade comprising
a girder substantially shaped as a U-profile,
a first shell part,
a second shell part, and
a box cap part,
wherein the girder and the box cap part constitutes, when assembled, a load carrying box profile of the blade and wherein the bottom part of the U-profile and the box cap part conform to the outer surface of the blade , and wherein the box cap part, the first shell part and the second shell part are connected to the girder.

For example in one embodiment, the first shell part constitutes a leading edge section of the blade and the second shell part constitutes a trailing edge section of the blade and the bottom part of the U-profile constitutes a part of the outer surface of the blade substantially opposite the box cap part, and

in another embodiment, the first shell part constitutes an upper shell part of the blade and the second shell part constitutes a lower part of the blade.

Thus, the above described objects and several other objects are obtained in a first aspect of the present invention by providing a wind turbine blade comprising individual components in the forms of
- a girder substantially shaped as a U-profile,
- a leading edge section,
- a trailing edge section, and
- a box cap part,
wherein the girder and the box cap part constitutes, when assembled, a load carrying box profile of the blade and wherein the bottom part of the U-profile constitutes a first part of the outer surface of the blade and wherein the box cap part constitutes a second part of the outer surface of the blade, substantially opposite to the first part, and wherein the box cap part, the trailing edge section and the leading edge section are connected to the girder.

The girder substantially shaped as a U-profile is hereinafter referred to as the U-profile. The U-profile is provided to primarily strengthen and/or reinforce the blade in its longitudinal direction and is preferably of a fibre reinforced plastic material or other suitable material. In this application a U-profile should be construed as an elongate constructional element capable of taking up loads, such as a beam or a spar comprising two parallel sides and a third substantially transverse "side" connecting the parallel sides. In embodiments of the invention, the U-profile component may itself comprise individual parts. Preferably, in such embodiments, the U-profile is assembled with two parallel sides connected by a transverse "side" in the shape of another, geometrically reversed but otherwise similar, box cap part. The U-profile may substantially extend along the length of the blade. However, it may also be preferred to provide the blade with two or more separated U-profiles in the longitudinal direction of the blade, especially for facilitating handling or transporting purposes.

The first part of the outer surface of the blade constituted by the bottom part of the U-profile may preferably be a cap part of the blade.

The second part of the outer surface of the blade that is substantially opposite to the before mentioned first part, may preferably be another cap part of the blade. In this context, substantially opposite refers to positions at the other side of the profile chord of the blade. The profile chord of the blade is an imaginary surface that contains the leading edge and the trailing edge of the blade and extends therebetween.

The box cap part, the trailing edge section and the leading edge section may preferably be connected to the U-profile and/or with each other. The connections, or joints, may be established by bonding, laminating or mechanical means.

When the U-profile and the box cap part are joined, they constitute the load carrying box profile of the blade. Particularly, with the configuration of the components according to the first aspect, the load bearing fibres in the cap parts are situated to the outermost part of the blade where they provide the most efficiency in counteracting the bending moment of the blade.

According to the first aspect the leading edge section may preferably be made in one piece by traditional laminating techniques. The section is much smaller than compared to the upper and lower shells of a conventional blade and this facilitates an improved possibility for controlling the laminate's quality during manufacture. Another important benefit is that no joining is necessary in the leading edge whereby the shape of the leading edge is not compromised due to misaligned assembly, thus eliminating the risk of deviation from the optimal profile as often seen on conventional blades. The result is that the optimal power output of the blade in operation is maintained.

According to the first aspect the trailing edge section may also be manufactured in one piece. This will avoid the normally necessary bonding connection in the trailing edge that often cause fractures in conventional blades. However, the trailing edge section may also be manufactured in two pieces that are joined in the trailing edge before the section is assembled with the other components. The access to the trailing edge in this situation is much better compared to the conventional blades and this facilitates the provision of a higher quality the trailing edge joint, avoiding many of the failures experienced in the conventional wind turbine blades. As with the leading edge section, the dimensions of the trailing edge section, whether the part is made in one or more pieces, are much smaller than compared to those of the upper and lower shells of conventional blades and this makes quality control much easier.

Each of the individual components according to the first aspect of the present invention may, due to their dimensions, be manufactured using an autoclave for improving the quality as previously described. Preferably, however, it is the box cap part and the U-profile that is subjected to use in an autoclave. The laminate of the component in the relevant mould is covered by a bag that is put under vacuum. The laminate and the mould are placed in the autoclave, which is pressurized and heated during the cure of the laminate. This result in a laminate with fully wetted fibres, an improved distribution of resin, low resin content and a very low void content.

According to the embodiments of first aspect of the invention, the individual components may preferably be manufactured separately. The individual components may then subsequently be bonded or laminated together to form a complete blade. The provision of a blade made from smaller individual components means that the components may be manufactured in moulds of a size that may fit in autoclaves that are economically feasible. Consequently, the provision of a blade constructed of individual components facilitates the use of an autoclave in the manufacturing of components for the blade which in turn produces blades of a higher quality than with the known techniques.

In embodiments, one or more of the individual components is/are at least partly made of a carbon fibre reinforced plastic material. As the use of an autoclave is facilitated by the invention it is particularly, but not exclusively, preferable to use carbon fibres for reinforcing the plastic materials of the components according to the invention because it is possible to fulfil the demands in terms of level of stretched fibres, controlled resin distribution and content and also low void content. Particularly, it may be advantageous to manufacture the box cap part in an extra good quality as the box cap part may constitute the cap part of the blade and an improved capability of taking up compression forces in the blade is therefore clearly beneficial.

In embodiments, the box cap part has a radius of curvature of at least 2 Meters. However, in certain embodiments the box cap part is completely linear or flat. The box closing may preferably be so designed that it is possible to produce the part on a nearly flat table or mould, further facilitating the use of an autoclave, and also makes it much easier to place plastic material in the mould of the box cap part. The easy access to the mould facilitates manufacture of the box cap part with accurate placing of the material, stretching of the fibres and also allows for a preferably mechanical pressurisation of the fibre material during the lay-up. Such a pressurisation will further lower the void content if prepreg materials are used. A nearly flat mould is particularly suited in connection with use of machines for laying up of fibres due to the unhindered access from the sides. The use of machines may further improve the level of stretched fibres and reduce the void content. The box cap part according to the invention may also be well suited for adjustments or adaptations subsequent to curing using CAD/CAM milling machines. With these machines, narrow tolerances in regard to width, length and thickness of the box cap part may be achieved. It may also be possible to shape the edges of the closing part so that they are prepared for connections with the other components. One particularly suitable type of joint for load transfer is a scarf joint used for bonding of the closing part to the other parts. However, any suitable type of joint may be applied.

Another advanced method of manufacturing the box closure part is by pultruding, wherein yarns of fibres are drawn thought a matrix which has the shape of a cross-section of the box closure part. In the matrix resin is added and cured as the complete part is drawn continuously from the matrix. This method has the potential of achieving the highest quality possible for fibre reinforced plastics.

In embodiments, one or both of the sides of the U-profile comprise a sandwich construction. However, one or both sides may be made as a single skin laminate but as the girder is subjected to compression forces, sandwich construction is a particularly useful solution enabling the sides to take up such forces. As the connection with the box cap part are typically at the end of the U-profile, the girders' resistance to deflection/buckling is not compromised, as it would be by joints positioned e.g. at the middle of their span.

In embodiments, the U-profile further comprises connection means at an end region of the sides thereof. In embodiments, the connection means comprises a flange integrated with the end region of the side(s). The flange may serve as a connection surface for bonding, laminating or mechanically fastening the girder to the respective other components. However, the flange and other suitable connection means may also be attached to the girder in stead of being integrated therewith.

In other embodiments, the box cap part may further comprise one or more stiffening means provided in the longitudinal direction of the blade. Particularly, when the box cap part constitutes a cap part of the blade it may be designed to have increased resistance against global deflection/buckling. A simple way to do this is to connect one or more stiffeners to the inner surface of the cap part in the along at least a part of the length of the blade. The stiffener may be of any suitable shape. Alternatively, the one or more stiffeners may be made integral with the box cap part. The caps' resistance to deflection/buckling may also be increased with the use of a sandwich construction or a hollow profile with internal stiffeners. These features may advantageously be included in the manufacture of the box cap part and the U-profile. The stiffeners may comprise any suitable material but are preferably made of same material as the main part itself.

At least some of the above described objects and other objects are obtained in a second aspect of the present invention by providing a box profile structure for a wind turbine blade comprising
- a girder substantially shaped as a U-profile, and
- a box cap part,
wherein the U-profile and the box cap part constitutes, when assembled, a load carrying box profile of the blade and wherein a bottom part of the U-profile conforms with, at least a part of a first shell part of the blade and wherein the box cap part conforms with at least a part of a second shell part of the blade.

The substantially U-shaped girder and the box cap part according to the second aspect of the invention may preferably be manufactured and assembled and/or connected by the methods and of the materials as described above with respect to the first aspect of the invention.

With this configuration the load carrying box profile may be assembled separately and subsequently bonded in between two shell parts. The shell parts will then cover the complete surface of the box profile and surround the U-shaped girder and the box cap part completely. This facilitates that shell parts from a conventionally manufactured blade maybe used with the novel box cap part and the U-profile.

Thus, in embodiments, a wind turbine blade comprising at least one box profile structure according to the second aspect of the invention as well as first and second shell parts is provided.

In accordance with a third aspect of the invention, a method is provided the steps of
producing a girder substantially shaped as a U-profile with a bottom conforming to a predetermined aerodynamic profile,
producing a first shell part having the shape of a part of the predetermined aerodynamic profile,
producing a second shell part having the shape of a part of the predetermined aerodynamic profile, and
producing a box cap part having the shape of a part of the predetermined aerodynamic profile,
connecting the box cap part to the girder thereby forming a load carrying box profile of the blade, and
connecting the first shell part and the second shell part to the girder. Below the invention will be described in more detail with reference to the exemplary embodiments illustrated in the drawings, wherein
Fig. 1 is a schematic, perspective view of a wind turbine blade indicating the directions of the flapwise and edgewise loads as well as an upper and lower side of the blade.
Fig. 2 shows a schematic cross sectional view of a first embodiment of a wind turbine blade according to the first aspect of the present invention.
Fig. 3a shows a schematic, cross sectional view of a blade and an enlarged detail of the box cap part provided with a stiffener in the form of a corrugated plate.
Fig. 3b shows a schematic, cross sectional view of a blade and an enlarged detail of the box cap part provided with a stiffener in the form of a top hat profile.
Fig. 4 shows a schematic view of a blade and an enlarged detail of the box cap part provided with a stiffener in the form one or more I-profiles.
Fig. 5 shows a schematic, cross sectional view of a blade wherein the box cap part is of a sandwich construction.
Fig. 6 shows a schematic, cross sectional view of a blade with a reinforcing member connected to the box profile,
Fig. 7 shows a schematic cross sectional view of an embodiment of a wind turbine blade according to a second aspect of the present invention.
Fig. 8 shows a schematic, cross sectional view of how the connections between the different components may be provided with a protective covering.
Figs. 9-12 show details of different solutions for connecting an upper part of the trailing edge section with the box cap part and with the U-shaped girder. Figs. 9 - 12 are also representative for the connecting of an upper part of the leading edge section with the box cap part and the U-shaped girder.
Figs. 13-15 show details of different solutions for connecting a lower part of the trailing edge section with the U-shaped girder. Figs. 13 - 15 are also representative for the connecting of an upper part of the leading edge section with the U-shaped girder.
Fig. 16 shows an alternative embodiment of the invention according to the first aspect of the invention.

The drawings are schematic and simplified for clarity, and they merely show details which are essential to the understanding of the invention, while other details have been left out. Throughout, the same reference numerals are used for identical or corresponding parts.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

Fig. 1 shows a wind turbine blade 1 in perspective and indicates the directions of the flapwise and edgewise loads by arrows F and E respectively. An upper and a lower side of the blade is denoted US and LS. The upper side US will be the suction side of the blade and the lower side LS will be the pressure side, when the blade is in normal operation.

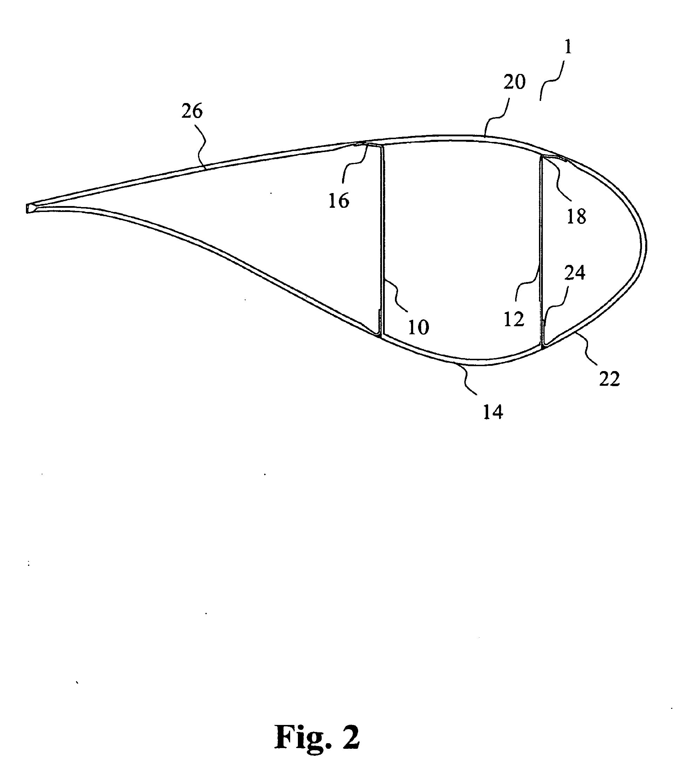

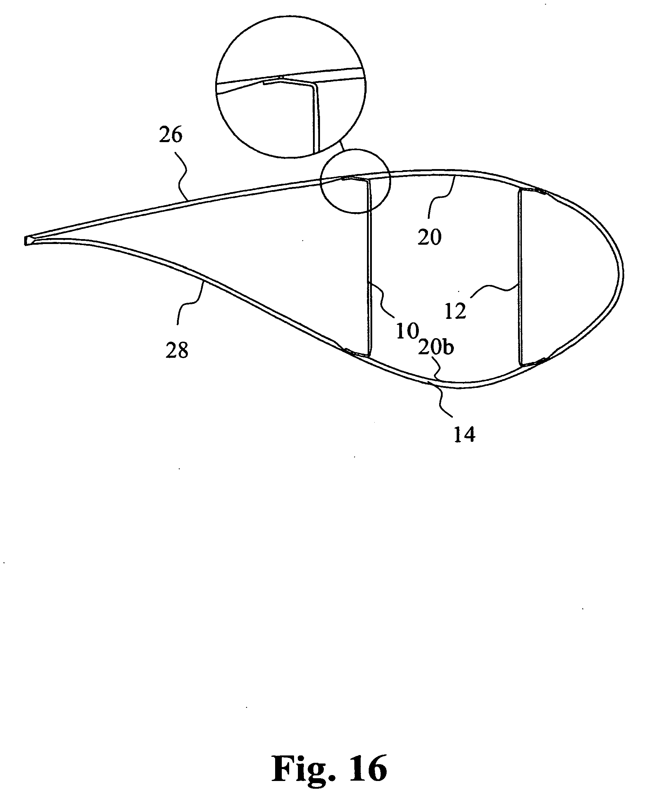

In Fig. 2 a cross sectional view of wind turbine blade 1 is shown. The wind turbine blade 1 comprises a girder. The girder of the embodiment shown in Fig. 1 is U-shaped and comprises two vertical girder parts 10, 12 and a bottom girder part 14 constituting a part of the outer surface of the blade 1. The three parts 10, 12, 14 are typically made integral with each other by a moulding process in which the U-shaped girder is made as an individual component. However, the various girder parts 10, 12, 14 can be made as separately produced parts assembled to form the U-shaped girder as previously described and as illustrated by way of example in Fig. 16.

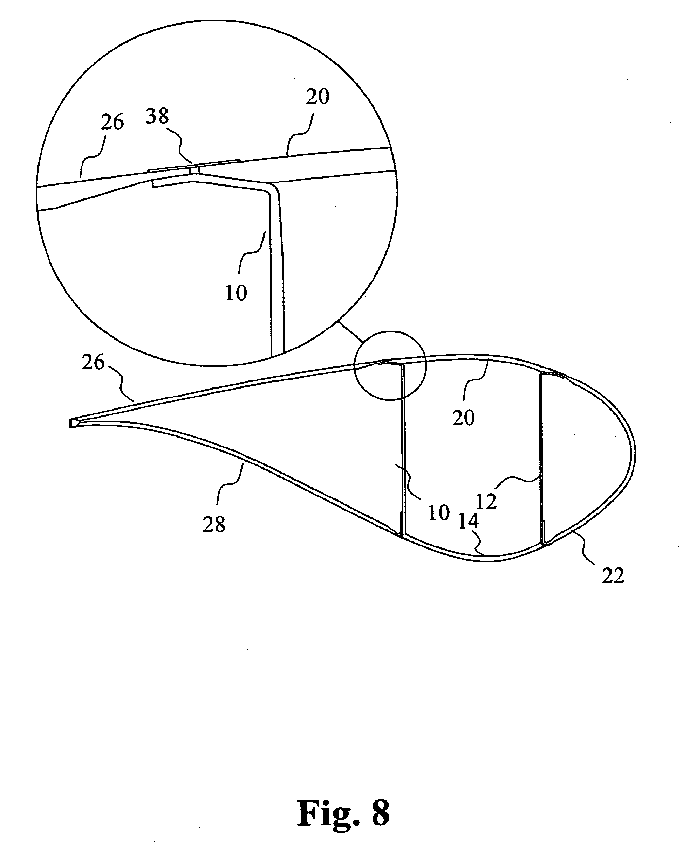

The upper ends of the girder parts 10, 12 are provided with flange parts 16, 18 to which a box cap part 20 is connected as shown in Fig. 16 and shown in more detail in Fig. 8. The box cap part 20 is formed so as to constitute the outer surface of the blade. Similarly, the girder part 14 constitutes also an outer surface of the blade. The blade further comprises a leading edge section 22. The leading edge section 22 is shaped as an open profile defining the leading edge section of the blade and is attached to the flange 18 of the girder 12 at the upper side of the profile and attached to the girder 12 by a flange 24 in a region in vicinity of the lower side of the blade.

The flanges 18, 16 are shown as outward pointing flanges; the flange 16 points towards the trailing edge and the flange 18 points towards, the leading edge. These flanges may instead be inwardly pointing flanges so that the flange 18 e.g. points in the direction of the trailing edge or a combination of inwardly and outwardly pointing flanges may be provided.

The leading edge section 22 is preferably attached to the girder 12 by a adhering technique in which e.g. resin is applied to the surfaces to be adhered which in turn are pressed against each other.

Similarly, the trailing edge section 26 is shaped as an open profile defining the trailing edge of the blade and attached to the girder 10 in a manner similar to the manner according to which the leading edge section 22 is attached to the girder 12.

It should be noticed, that although the box cap part is shown as constituting an upper surface part of the outer surface the girder can be geometrically reversed in such a manner that the girder part 14 constitutes an outer surface part of the upper surface and the box cap part 20 constitutes an outer surface part of the lower surface.

The girder with box cap part extends along the length of the blade. Typically, the girder with box cap part extends through-out the entire span of the wing. However, the load on the tip of the blade is typically low and the size of the tip is typically small allowing the tip to be formed without any girder parts 10, 12, 14 and box cap part 20. Thus, the girder parts with box cap part may in some preferred embodiments extend only to an extent where the load carrying effect of the girder with box cap part plays a role. It has been found that an extension of at least 70%, such as at least 80%, preferably at least 90% or even at least 95% of the lengthwise extension of the blade is sufficient to provide a suitable stiffness of the blade.

In embodiments where the girder with box cap part does not extend through-out the whole lengthwise extension of the blade, the tip may preferably be made as a single piece which is attached to the girder.

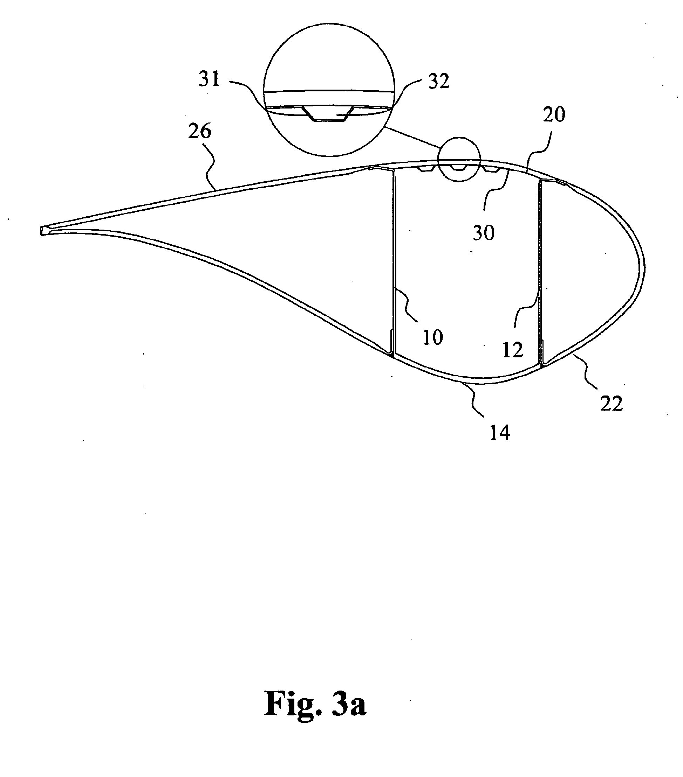

In Fig. 3a is shown a reinforcement of the box cap part 20 in the form of a stiffener in the lengthwise direction of the blade, in Fig. 3a provided as a corrugated plate 30. The plate 30 may comprise any suitable shape, size and number of corrugations and be of a fibre reinforced plastic or a lightweight metal such as aluminium. In Fig. 3a, a number of three corrugations are shown. A corrugation 31 is shown enlarged in detail. The cavities 32 created by the corrugations may be filled with a lightweight foamed material (not shown). The reinforcement may also, or additionally, be provided on the opposite girder part 14. The plate 30 may be adhered, bonded or mechanically attached to the parts 14, 20. The reinforcement may also be integrated with either of the parts 14, 20 during their manufacture.

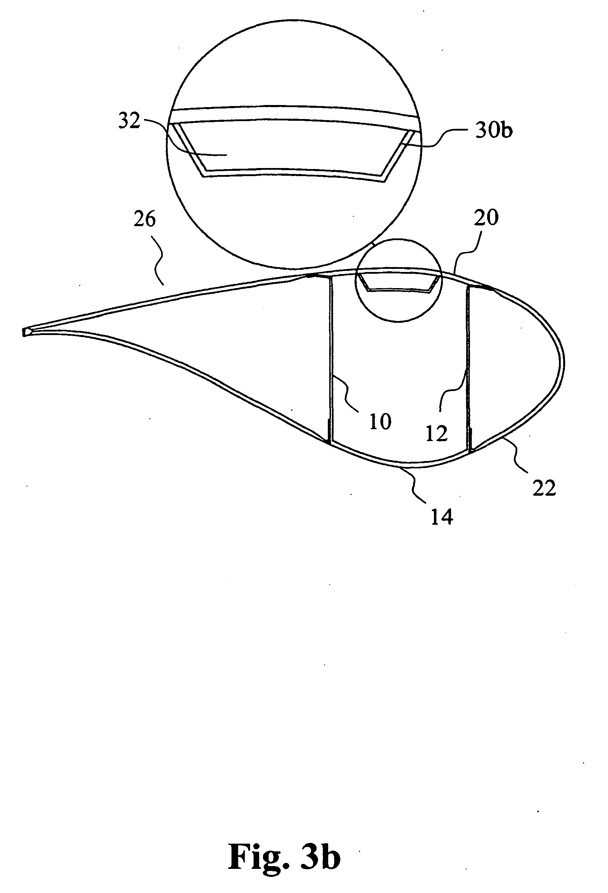

Fig. 3b is substantially identical to Fig. 3a, but shows a reinforcement of the box cap part 20 in the form of a stiffener in the lengthwise direction of the blade, in Fig. 3b provided as a top hat profile 30b. The top hat profile 30b may be of any suitable shape and size and be of a fibre reinforced plastic or a lightweight metal such as aluminium. The top hat profile 30b is shown enlarged in detail. The cavity 32 created by the top hat may be filled with a lightweight foamed material (not shown). The top hat profile may also be used in connection with making the box cap part at least partly as a sandwich construction. This kind of reinforcement may in an identical manner also, or additionally, be provided on the opposite girder part 14. The top hat profile 30b may be adhered, bonded or mechanically attached to the parts 14, 20. In Fig. 3b, the top hat profile is shown without any bonding "feet" for the attachment to the box cap part 20. However, it may comprise such bonding "feet" or it may alternatively be made integral with the parts 14, 20. One or more such top hat profiles may be provided.

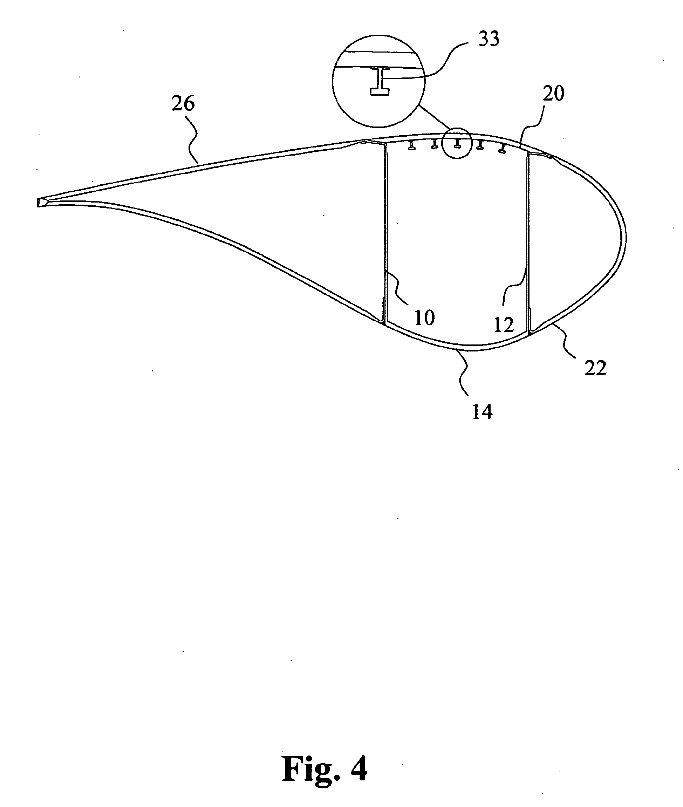

Fig. 4 substantially corresponds to Fig. 3a+b except that the stiffener in the lengthwise direction of the blade is provided as I-profiles, in Fig. 4 shown on the box cap part 20. One I-profile 33 is shown enlarged in detail. The one or more I-profiles 33 may be of any suitable size and be of a fibre reinforced plastic or a lightweight metal such as aluminium or other materials. Like in Fig. 3 the I-profiles may also, or additionally, be provided on the opposite girder part 14. They may be adhered, bonded or mechanically attached to the parts 14, 20. The I-profiles may also be integrated with either of the parts 14, 20 during their manufacture e.g. by lamination.

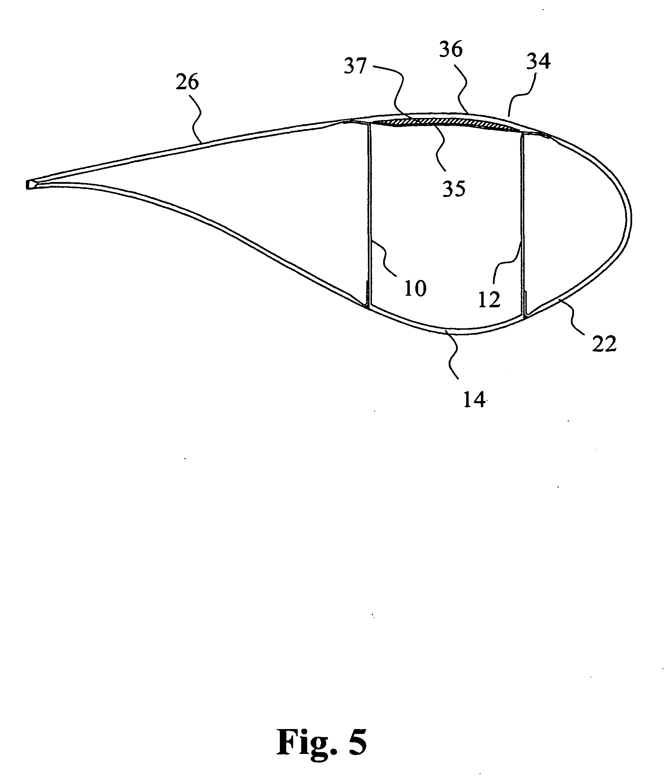

In Fig. 5 is shown a blade having a box cap part 34 of a sandwich construction. Box cap part 34 is shown as consisting of outer layers 35, 36 of fibre reinforced plastic on both sides of a foamed material 37. Even though the laminate may be made thinner by using carbon fibres, it may simultaneously be more sensible to buckling caused by compression forces. Thus, a sandwich construction enables the box cap part 35 with a high resistance against buckling from the compression forces therein. The space between the outer layers 35, 36 may in embodiments further comprise one or more "internal" stiffeners in the blade's lengthwise direction. In these embodiments foamed material 37 may be provided in sections between the stiffeners. The stiffeners may comprise any suitable shape, size and material, preferably substantially corresponding to the choices of the above described "external" reinforcements of the parts 14, 20.

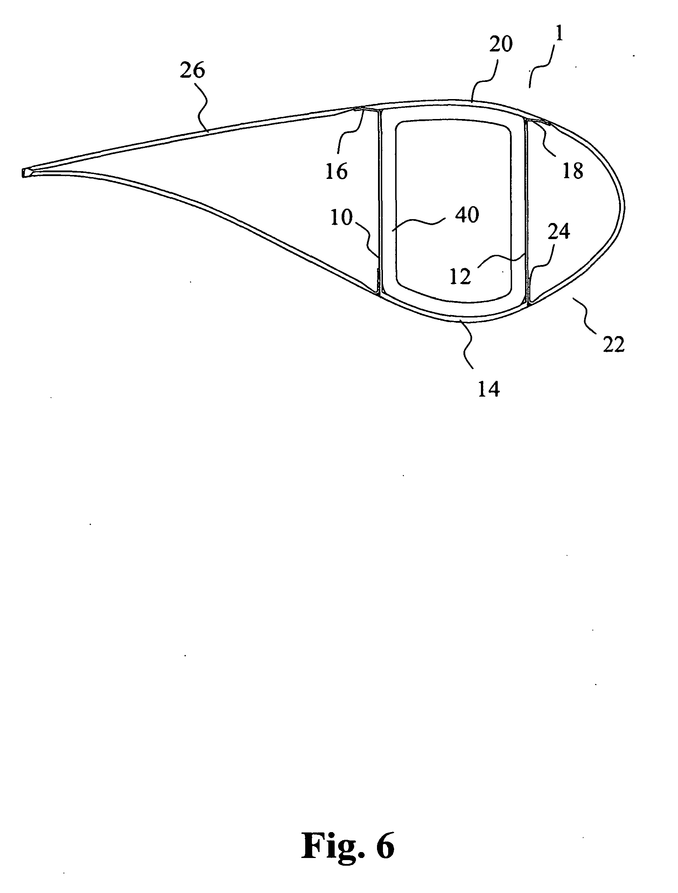

Fig. 6 shows a transverse cross-section through the blade 1 with an internal reinforcing member 40 of the box profile. In the illustrated embodiment, the reinforcing member 40 is a plate preferably with one or more cut-outs for weight saving purposes. The reinforcing member 40 supports the box cap part 20 and prevents the box cap part 20 from buckling like the reinforcements shown in Figs. 3 - 5. The plate 40 also facilitates assembly of the box profile and secures a strong connection between the box profile parts. The plate 40 further reinforces the web, i.e. the vertical girder parts 10, 12, of the box profile preventing buckling failure of the box profile.

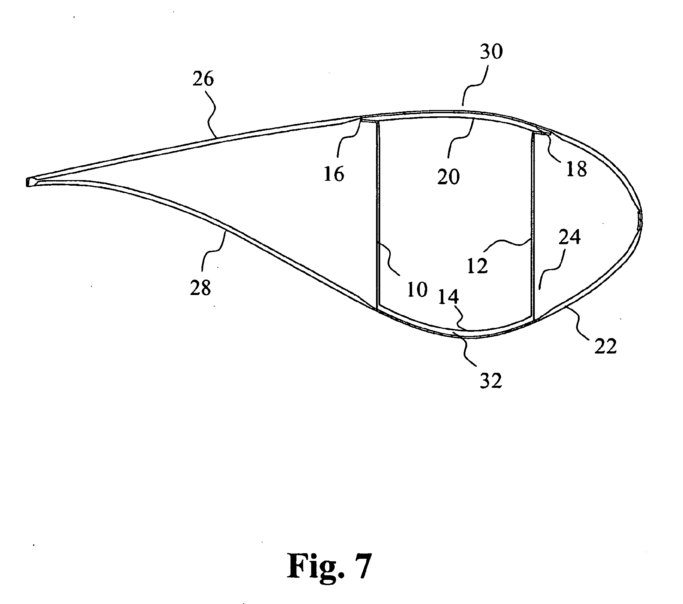

Preferably, the blade 1 has a plurality of reinforcing members 40 positioned spaced apart in appropriate positions along the longitudinal direction of the blade 1. The reinforcing member 40 can be made of any suitable material, and preferably the reinforcing member 40 is made of the same material as the blade 1. Further, the reinforcing member 40 can be made as a sandwich construction. The reinforcing member 40 may be reinforced with stringers or flanges to avoid buckling failure of the member. The reinforcing member 40 can be fastened with any suitable method, and preferably the reinforcing member 40 is bonded or laminated to the box profile. An edge of the reinforcing member 40 may be provided with bonding flanges for this purpose. In Fig. 7 an embodiment of the wind turbine blade according to a second aspect of the present invention is shown. Also in this embodiment, the girder comprises girder parts 10, 12, 14 similar to the girder parts shown in Fig. 2. Furthermore, a box cap part 20 is provided similar to the box cap part of Fig. 2. The box cap part 20 is connected to the girder part 10, 12 in a manner similar to the manner disclosed above in connection with Fig. 2.

The box cap part 20 and the girder part 14 have each a shape conforming to the outer surface parts of the blade. These parts are covered by two shell parts, an upper shell part 26 and a lower shell part 28 that defines the shape of the leading and trailing edges of the blade. The U-profile, box cap part 20 and upper and lower shell parts 26, 28 are preferably manufactured as individual components which are assembled into a blade. As previously described, the U-profile may itself comprise individual parts. Particularly, the girder part 14 of the U-profile may be another box cap part 20b similar, but typically with a different radius of curvature, to box cap part 20, see Fig. 16. The box cap part 20, and possibly also 20b, may preferably initially be connected to the girder parts 10, 12 and there after the two shell parts 26, 28 are subsequently connected thereto while simultaneously bonding or adhering the two shell parts 26, 28 at their trailing and leading edges.

The regions 30, 32 of the upper and lower shell parts where they are attached to the box part closing 20 and girder part 14 respectively, are in general thinner than the remaining regions of the shell parts.

Also in this embodiment, the box cap part 20 and the girder may be geometrically reversed so the box cap part 20 is located at the lower side and the girder part 14 located at the upper side of the blade. Furthermore, the longitudinal extension of the girder with box cap part 20 in this embodiment may typically be the same as the extension of the girder with box cap part of Fig. 2.

In Fig. 8 is shown how the connections between the different components may subsequent to the assembly be provided with a protecting surface. In Fig. 8, the connection between trailing edge section 26, box cap part 20 and girder part 10 is shown as an example. Although the girder part 14 and the box cap part 20 as e.g. disclosed in Fig. 2 may constitute parts of the outer surfaces of the blade, these connections may be coated once the blade is assembled typically in order to provide a smooth transition between for instance the trailing edge section 26 or the leading edge section 22 and the box cap part 20 and/or the girder part 14. Such a coating is typically a surface finish which does not change any of the structural characteristics of the profile. The coating may also comprise adapted thin sheets or skins 38, or similar, of fibre reinforced plastic material that is laminated to the surfaces as an effective measure to protect the joints.

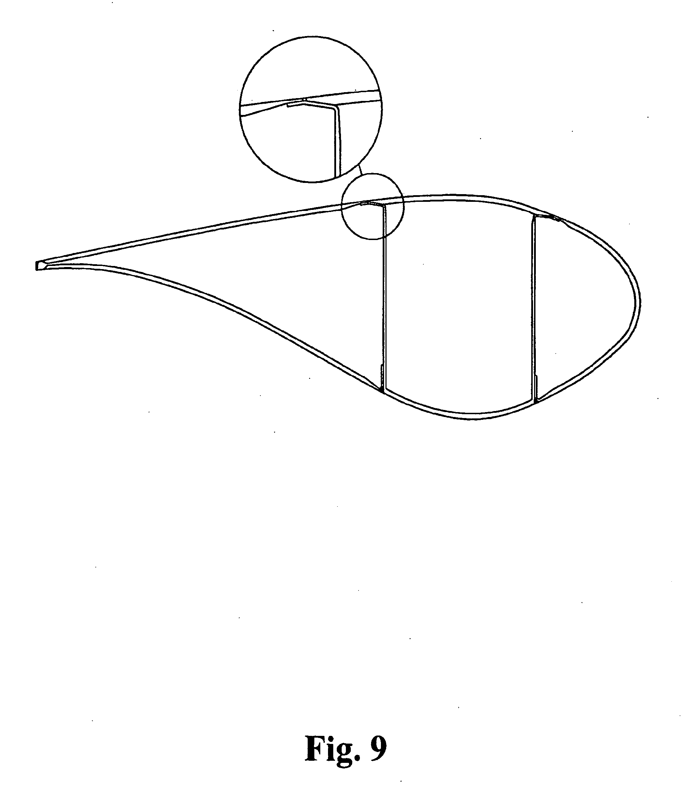

Figs. 9 - 12 show ways of connecting the upper part of the trailing edge section, box cap part and the U-profile. The connections may be made in several ways, and may primarily depend on the method used for the overall assembly of the blade components. Even though the details are only shown and described for the trailing edge section, they are also applicable for the leading edge section.

The laminate of the trailing edge section and box cap part may be bonded end to end on top of the flange on the U-profile as shown in Fig. 9. This solution demands a wide flange on the U-profile, but is advantageous in that the components may be assembled in any sequence desired.

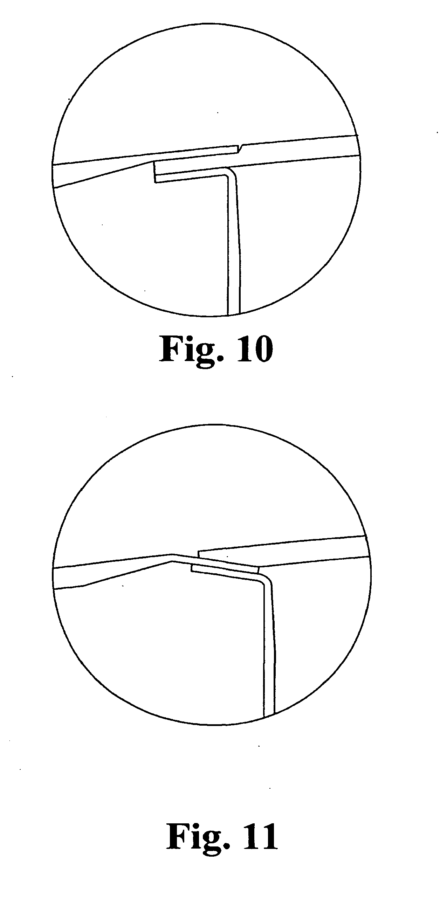

The box cap part may be bonded on top of the U-profile before the trailing edge section is bonded on top of the box cap part as shown in Fig. 10. This solution has the advantage that the box profile may be assembled before the other components are bonded to the profile.

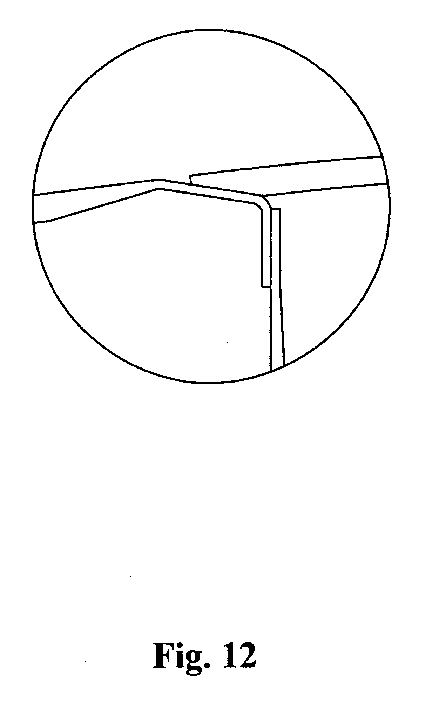

The trailing edge section and/or the leading edge section may be bonded on top or the side of an end region of the U-profile before the box cap part is bonded on top of the leading and trailing edge sections as shown in Figs. 11 and 12.

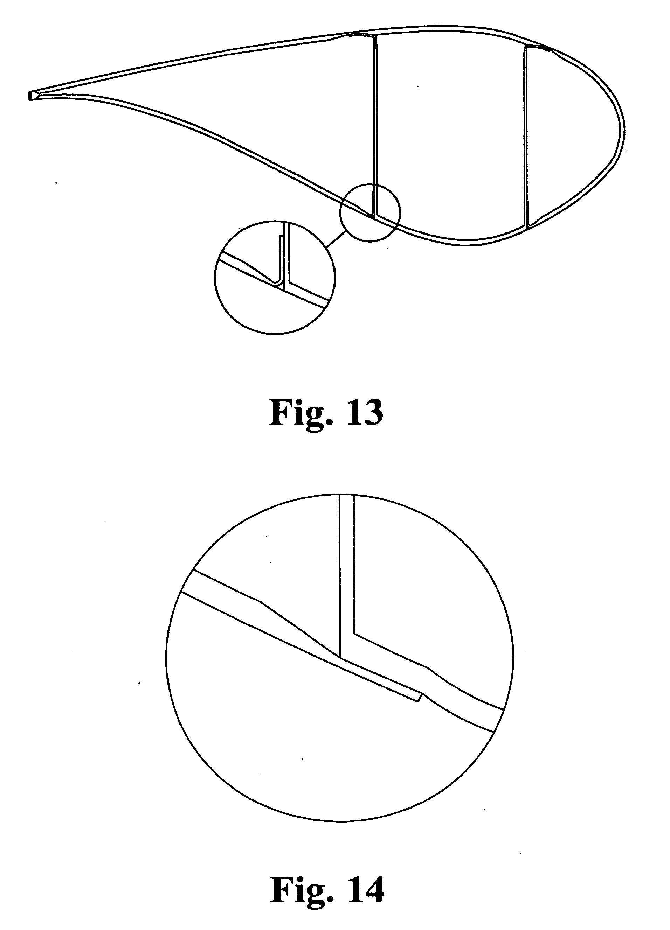

Figs. 13 - 15 show ways of connecting the lower part of trailing edge section and the U-profile. The connections may be made in several ways, and may primarily depend on the method used for the overall assembly of the blade components. Even though the details are only shown and described for the trailing edge section, they are also applicable for the leading edge section.

The laminate in the lower part of the trailing edge section is made with a flange, which makes it possible to bond the section to the side of the U-profile as shown in Fig. 13. This solution makes it easy to align the two parts, and make a joint without any unevenness.

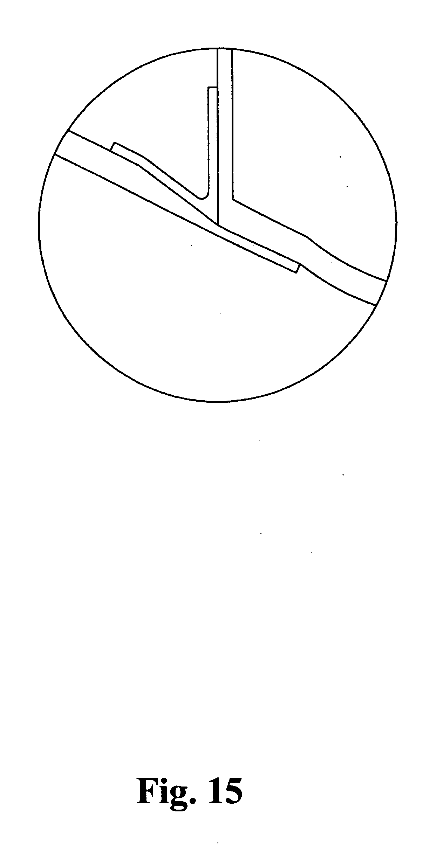

The laminate in lower part of the trailing edge section is bonded on top on the outside on the cap part of the U-profile as shown in Fig. 14. This solution facilitates an easier manufacturing of the trailing edge section. A further, substantially V-shaped bonding member may bond the inner surface of the trailing edge section and the side of the U-profile as shown in Fig. 15.

In Fig. 16 is shown an embodiment wherein the girder part 14 is equivalent to another box cap part 20b, similar to box cap part 20 but only reversed, thus facilitating another sequence of assembling the individual components.

Although the present invention has been described in connection with the specified embodiments it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the drawings shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A wind turbine blade (1) with
a load carrying box profile comprising
a girder substantially shaped as a U-profil (10,12,14), and
a box cap part (20,34) wherein the bottom part of the U-profile and the box cap part conform to the outer surface of the blade,
a first shell part (26) connected to the girder, and
a second shell part (28) connected to the girder, and wherein each of the girder, the box cap part, the first shell part, and the second shell part is manufactured separately.

2. A wind turbine blade according to claim 1, the first shell part constitutes a leading edge section of the blade and the second shell part constitutes a trailing edge section of the blade and wherein the bottom part of the U-profile constitutes a part of the outer surface of the blade substantially opposite the box cap part.

3. A wind turbine blade according to claim 1, the first shell part constitutes an upper shell part of the blade and the second shell part constitutes a lower part of the blade.

4. A wind turbine blade according to claim 3, wherein at least some of the individual components are at least partly made of a carbon fibre reinforced plastic material.

5. A wind turbine blade according to any of the preceding claims, wherein the box cap part has a radius of curvature of at least 2 Meters.

6. A wind turbine blade according to any of the preceding claims, wherein one or both of the sides of the girder comprise a sandwich construction.

7. A wind turbine blade according to any of the preceding claims, wherein the box cap part further comprises one or more stiffening means provided in the longitudinal direction of the blade.

8. A wind turbine blade according to any of the preceding claims, further comprising a reinforcing member positioned inside the box profile and extending transversal to the longitudinal extension of the blade.

9. A wind turbine blade according to claim 8, wherein the reinforcing member is a plate.

10. A wind turbine blade according to claim 8 or 9, further comprising a plurality of the reinforcing members positioned spaced apart in appropriate positions along the longitudinal direction of the blade.

11. A method of producing a wind turbine blade (1) comprising the steps of
separately producing a girder substantially shaped as a U-profile (10,12,14) with a bottom conforming to a predetermined aerodynamic profile,
separately producing a first shell part (26) having the shape of a part of the predetermined aerodynamic profile,
separately producing a second shell part (28) having the shape of a part of the predetermined aerodynamic profile, and
separately producing a box cap part (20,34) having the shape of a part of the predetermined aerodynamic profile,
connecting the box cap part/to the girder thereby forming a load carrying box profile of the blade, and
connecting the first shell part (26) and the second shell part (28) to the girder.

12. A method according to claim 11, wherein the first shell part constitutes a leading edge section of the blade and the second shell part constitutes a trailing edge section of the blade and wherein the bottom part of the U-profile constitutes a part of the outer surface of the blade substantially opposite the box cap part.

13. A method according to claim 11, the first shell part constitutes an upper shell part of the blade and the second shell part constitutes a lower part of the blade.

14. A method according to any of claims 11 - 13, wherein the box cap part is produced in an autoclave or by pultrusion.

15. A method according to any of claims 11 - 14, wherein one or more of the individual components are at least partly made of a carbon fibre reinforced plastic material.

16. A method according to any of claims 11 -15, wherein the box cap part has a radius of curvature of at least 2 Meters.

17. A method according to any of claims 11 - 16, wherein one or both of the sides of the girder comprise a sandwich construction.

18. A method according to any of claims 11 - 17, further comprising the step of positioning a reinforcing member inside the box profile that extends transversal to the longitudinal extension of the blade.

19. A method according to claim 18, further comprising the step of positioning a plurality of the reinforcing members spaced apart in appropriate positions along the longitudinal direction of the blade.

## Patentansprüche

1. Windturbinenschaufel (1) mit
einem lasttragenden Kastenprofil, umfassend
einen Träger, der im Wesentlichen als U-Profil (10, 12, 14) geformt ist, und
ein Kastendeckelteil (20, 34), wobei das Unterteil des U-Profils und das Kastendeckelteil an die Au ßenoberfläche der Schaufel angepasst sind,
einem ersten Schalenteil (26), das an den Träger angeschlossen ist, und
einem zweiten Schalenteil (28), das an den Träger angeschlossen ist, und wobei der Träger, das Kastendeckelteil, das erste Schalenteil und das zweite Schalenteil jeweils separat hergestellt sind.

2. Windturbinenschaufel nach Anspruch 1, wobei das erste Schalenteil einen Vorderkantenabschnitt der Schaufel bildet, und das zweite Schalenteil einen Hinterkantenabschnitt der Schaufel bildet, und wobei das Unterteil des U-Profils einen Teil der Au ßenfläche der Schaufel im Wesentlichen gegenüber dem Kastendeckelteil bildet.

3. Windturbinenschaufel nach Anspruch 1, wobei das erste Schalenteil ein oberes Schalenteil der Schaufel bildet, und das zweite Schalenteil ein unteres Teil der Schaufel bildet.

4. Windturbinenschaufel nach Anspruch 3, wobei zumindest einige der Einzelkomponenten zumindest teilweise aus einem kohlefaserverstärkten Kunststoffmaterial hergestellt sind.

5. Windturbinenschaufel nach einem der vorhergehenden Ansprüche, wobei das Kastendeckelteil einen Krümmungsradius von mindestens zwei Metern hat.

6. Windturbinenschaufel nach einem der vorhergehenden Ansprüche, wobei eine oder beide Seite/n des Trägers eine Sandwichkonstruktion umfasst/umfassen.

7. Windturbinenschaufel nach einem der vorhergehenden Ansprüche, wobei das Kastendeckelteil darüber hinaus eine oder mehrere Versteifungseinrichtung/en umfasst, die in der Längsrichtung der Schaufel vorgesehen ist/sind.

8. Windturbinenschaufel nach einem der vorhergehenden Ansprüche, darüber hinaus ein Verstärkungsteil umfassend, das im Inneren des Kastenprofils angeordnet ist und sich quer zur Längserstreckung der Schaufel erstreckt.

9. Windturbinenschaufel nach Anspruch 8, wobei es sich bei dem Verstärkungsteil um eine Platte handelt.

10. Windturbinenschaufel nach Anspruch 8 oder 9, darüber hinaus mehrere der Verstärkungsteile umfassend, die voneinander beabstandet an geeigneten Stellen in der Längsrichtung der Schaufel angeordnet sind.

11. Verfahren zum Herstellen einer Windturbinenschaufel (1), die folgenden Schritte umfassend:
separates Herstellen eines im Wesentlichen als U-Profil (10, 12, 14) geformten Trägers mit einer Unterseite, die einem vorbestimmten aerodynamischen Profil entspricht,
separates Herstellen eines ersten Schalenteils (26) mit der Form eines Teils des vorbestimmten aerodynamischen Profils,
separates Herstellen eines zweiten Schalenteils (28) mit der Form eines Teils des vorbestimmten aerodynamischen Profils, und
separates Herstellen eines Kastendeckelteils (20, 34) mit der Form eines Teils des vorbestimmten aerodynamischen Profils,
Anschließen des Kastendeckelteils (20, 34) an den Träger, wodurch ein lasttragendes Kastenprofil der Schaufel gebildet wird, und
Anschließen des ersten Schalenteils (26) und des zweiten Schalenteils (28) an den Träger.

12. Verfahren nach Anspruch 11, wobei das erste Schalenteil einen Vorderkantenabschnitt der Schaufel bildet, und das zweite Schalenteil einen Hinterkantenabschnitt der Schaufel bildet, und wobei das Unterteil des U-Profils einen Teil der Außenfläche der Schaufel im Wesentlichen gegenüber dem Kastendeckelteil bildet.

13. Verfahren nach Anspruch 11, wobei das erste Schalenteil ein oberes Schalenteil der Schaufel bildet, und das zweite Schalenteil ein unteres Teil der Schaufel bildet.

14. Verfahren nach einem der Ansprüche 11 bis 13, wobei das Kastendeckelteil in einem Autoklaven oder durch Pultrusion hergestellt wird.

15. Verfahren nach einem der Ansprüche 11 bis 14, wobei eine oder mehrere der Einzelkomponenten zumindest teilweise aus einem kohlefaserverstärkten Kunststoffmaterial hergestellt sind.

16. Verfahren nach einem der Ansprüche 11 bis 15, wobei das Kastendeckelteil einen Krümmungsradius von mindestens zwei Metern hat.

17. Verfahren nach einem der Ansprüche 11 bis 16, wobei eine oder beide Seite/n des Trägers eine Sandwichkonstruktion umfasst/umfassen.

18. Verfahren nach einem der Ansprüche 11 bis 17, darüber hinaus den Schritt umfassend, im Inneren des Kastenprofils ein Verstärkungsteil anzuordnen, das sich quer zur Längserstreckung der Schaufel erstreckt.

19. Verfahren nach Anspruch 18, darüber hinaus den Schritt umfassend, mehrere der Verstärkungsteile voneinander beabstandet an geeigneten Stellen in der Längsrichtung der Schaufel anzuordnen.

## Revendications

1. Aube de turbine d'éolienne (1) comprenant :
un profilé en caisson porteur de charge, comprenant :
une poutrelle sensiblement conformée en profilé en U (10, 12, 14), et
une partie couvre-caisson (20, 34), dans laquelle la partie de fond du profilé en U et la partie couvre-caisson se conforment à la surface externe de l'aube,
une première partie de coque (26) raccordée à la poutrelle, et
une seconde partie de coque (28) raccordée à la poutrelle et dans laquelle chacune des pièces choisies parmi la poutrelle, la partie couvre-caisson, la première partie de coque et la seconde partie de coque est fabriquée séparément.

2. Aube de turbine d'éolienne selon la revendication 1, dans laquelle la première partie de coque constitue une section de bord d'attaque de l'aube et la seconde partie de coque constitue une section de bord de fuite de l'aube, et dans laquelle la partie de fond du profilé en U constitue une partie de la surface externe de l'aube sensiblement opposée à la partie couvre-caisson.

3. Aube de turbine d'éolienne selon la revendication 1, dans laquelle la première partie de coque constitue une partie de coque supérieure de l'aube et la seconde partie de coque constitue une partie inférieure de l'aube.

4. Aube de turbine d'éolienne selon la revendication 3, dans laquelle au moins certains des composants individuels sont au moins en partie constitués d'une matière plastique renforcée par des fibres de carbone.

5. Aube de turbine d'éolienne selon l'une quelconque des revendications précédentes, dans laquelle la partie couvre-caisson a un rayon de courbure d'au moins 2 mètres.

6. Aube de turbine d'éolienne selon l'une quelconque des revendications précédentes, dans laquelle l'un ou les deux côtés de la poutrelle comprend ou comprennent une structure en sandwich.

7. Aube de turbine d'éolienne selon l'une quelconque des revendications précédentes, dans laquelle la partie couvre-caisson comprend en outre un ou plusieurs moyens raidisseurs prévus dans la direction longitudinale de l'aube.

8. Aube de turbine d'éolienne selon l'une quelconque des revendications précédentes, comprenant en outre un élément de renfort positionné à l'intérieur du profilé en caisson et s'étendant transversalement à l'extension longitudinale de l'aube.

9. Aube de turbine d'éolienne selon la revendication 8, dans laquelle l'élément de renfort est une plaque.

10. Aube de turbine d'éolienne selon la revendication 8 ou 9, comprenant en outre une pluralité des éléments de renfort qui sont positionnés espacés l'un de l'autre dans des positions appropriées dans la direction longitudinale de l'aube.

11. Procédé de production d'une aube de turbine d'éolienne (1), comprenant les étapes consistant à :
produire séparément une poutrelle sensiblement conformée en profilé en U (10, 12, 14) avec un fond se conformant à un profil aérodynamique prédéterminé,
produire séparément une première partie de coque (26) ayant la forme d'une partie du profil aérodynamique prédéterminé,
produire séparément une seconde partie de coque (28) ayant la forme d'une partie du profil aérodynamique prédéterminé et
produire séparément une partie couvre-caisson (20, 34) ayant la forme d'une partie du profil aérodynamique prédéterminé,
raccorder la partie couvre-caisson (20, 34) à la poutrelle de manière à former un profilé en caisson porteur de charge de l'aube, et
raccorder la première partie de coque (26) et la seconde partie de coque (28) à la poutrelle.

12. Procédé selon la revendication 11, dans lequel la première partie de coque constitue une section de bord d'attaque de l'aube et la seconde partie de coque constitue une section de bord de fuite de l'aube et dans lequel la partie de fond du profilé en U constitue une partie de la surface externe de l'aube sensiblement opposée à la partie de couvre-caisson.

13. Procédé selon la revendication 11, dans lequel la première partie de coque constitue une partie de coque supérieure de l'aube et la seconde partie de coque constitue une partie inférieure de l'aube.

14. Procédé selon l'une quelconque des revendications 11 à 13, dans lequel la partie couvre-caisson est produite dans un autoclave ou par pultrusion.

15. Procédé selon l'une quelconque des revendications 11 à 14, dans lequel un ou plusieurs des composants individuels est ou sont au moins en partie constitués d'une matière plastique renforcée par des fibres de carbone.

16. Procédé selon l'une quelconque des revendications 11 à 15, dans lequel la partie couvre-caisson a un rayon de courbure d'au moins 2 mètres.

17. Procédé selon l'une quelconque des revendications 11 à 16, dans lequel un ou les deux des côtés de la poutrelle comprend ou comprennent une structure en sandwich.

18. Procédé selon l'une quelconque des revendications 11 à 17, comprenant par ailleurs l'étape de positionnement d'un élément de renfort à l'intérieur du profilé en caisson qui s'étend transversalement à l'extension longitudinale de l'aube.

19. Procédé selon la revendication 18, comprenant par ailleurs l'étape de positionnement d'une pluralité des éléments de renfort espacés l'un de l'autre dans des positions appropriées dans la direction longitudinale de l'aube.
